# EUROPÄISCHE PATENTSCHRIFT

(11) **EP 1 752 586 B1**
(45) Veröffentlichungstag und Bekanntmachung des Hinweises auf die Patenterteilung: **12.11.2008**
(21) Anmeldenummer: 06021974.8
(22) Anmeldetag: 27.05.2002
(51) Int. Cl.: E02F 9/20, H02K 7/18, F04B 1/12

(54) **Übertragungssystem für hydrostatisch angetriebenes Fahrzeug mit drehbarem Oberwagen und mit hydrostatischer Kolbenmaschine mit Stellungsrückmeldung**
Transmission system for hydraulically propulsed vehicle with a slewing upper body and with a hydrostatic piston engine with position feedback
Dispositif de transmission pour un véhicule comprenant une tourelle rotative et avec une machine hydraulique avec rétroaction du signal de position

(30) Priorität: 11.06.2001 DE 10128209
(43) Veröffentlichungstag der Anmeldung: 14.02.2007
(62) Teilanmeldung aus: 02011767.7
(73) Patentinhaber: Brueninghaus Hydromatik GmbH, 89275 Elchingen (DE)
(72) Erfinder: Stölzer, Rainer, 89231 Neu-Ulm (DE)
(74) Vertreter: Körfer, Thomas

(56) Entgegenhaltungen:
- EP-A- 0 570 754
- WO-A-97/23067
- DE-A1- 4 342 006
- DE-A1- 19 956 402
- DE-C1- 3 722 215
- FR-A- 2 716 318
- US-A- 3 166 344
- US-A- 3 173 039
- US-A- 3 477 746
- US-A- 5 220 225

## Beschreibung

Die Erfindung betrifft ein hydrostatisch angetriebenes Fahrzeug mit einem Übertragungssystem.

Die Antriebseinheit eines hydrostatisch angetriebenen Fahrzeugs, wie beispielsweise einem Bagger, besteht aus einer als Pumpe arbeitenden hydrostatischen Kolbenmaschine, sowie einer als Hydromotor arbeitenden hydrostatischen Kolbenmaschine. Die als Pumpe arbeitende hydrostatische Kolbenmaschine wird von einem Antriebsmotor angetrieben. Der Antriebsmotor eines Fahrzeugs mit einem bezüglich eines Unterwagens drehbar angeordneten Oberwagens sowie die hydrostatische Kolbenmaschine, welche als Pumpe arbeitet, sind dabei zumeist in dem Oberwagen angeordnet. Der Oberwagen ist mit einer drehbaren Einrichtung auf einem Unterwagen fixiert. Die als Motor arbeitenden hydrostatischen Kolbenmaschinen, welche für den Fahrantrieb vorgesehen sind, sind in dem Unterwagen angeordnet. Die hydrostatischen Kolbenmaschinen des Ober- bzw. Unterwagens sind über ein Leitungssystem miteinander verbunden, über welches Arbeitsdrücke, Steuerdrücke und Tankdrücke übertragbar sind.

In dem Oberwagen ist ferner die elektrische Anlage angeordnet, durch welche beispielsweise die Drehzahl des Antriebsmotors geregelt wird oder Schaltventile zur Betätigung des Schaufelarmes gestellt werden. Die Energieversorgung der elektrischen Anlage wird durch einen an den Antriebsmotor angekoppelten Generator gewährleistet, durch den eine Batterie gespeist wird mit der die elektrischen Verbraucher über ein Netz von elektrischen Leitungen verbunden sind.

Die Steuerung und Regelung der im Unterwagen angeordneten hydrostatischen Kolbenmaschine, etwa zum Korrigieren der Fahrgeschwindigkeit, erfolgt ausschließlich über Steuerdrücke und hydraulisch betätigte Regelventile. Eine Durchführung von elektrischen Leitungen vom Oberwagen in den Unterwagen ist aufgrund der Möglichkeit, den Oberwagen unbegrenzt in eine beliebige Richtung drehen zu können, unmöglich.

In der Druckschrift WO 97/23067 ist ein zweiteiliges Übertragungssystem gezeigt, welches Signale zwischen dessen beide relativ zueinander verdrehbaren Teile überträgt. Die Signale können dabei elektrisch oder optisch sein. Jedoch ist eine elektrische Verbindung des Oberwagens mit dem Unterwagen durch Schleifkontakte in der Praxis wenig geeignet, da aufgrund der schwierigen Arbeitsbedingungen mit hoher Neigung zum Verschmutzen, bei denen Fahrzeuge der beschriebenen Art eingesetzt werden, eine Ausfallsicherheit nicht gewährleistet werden kann. Die gezeigte optische Verbindung ist lediglich zur Signalübertragung vorgesehen.

Die Druckschrift FR-A-2716318 zeigt ebenfalls ein Übertragungssystem zur Übertragung elektrischer bzw. optischer Signale zwischen zwei relativ zueinander verdrehbaren Strukturen.

Der Erfindung liegt die Aufgabe zugrunde, ein hydrostatisch angetriebenes Fahrzeug mit einem Übertragungssystem zu schaffen, mit dem eine sichere Kommunikation zwischen einem Oberwagen und einem Unterwagen des hydrostatisch angetriebenen Fahrzeugs ermöglicht wird.

Die Aufgabe wird durch das erfindungsgemäße hydrostatisch angetriebene Fahrzeug mit dem Übertragungssystem nach Anspruch 1 gelöst.

Das hydrostatisch angetriebene Fahrzeug gemäß Anspruch 1 hat den Vorteil, daß im Ober- bzw. im Unterwagen eines Fahrzeugs zwei elektrisch abgeschlossene, miteinander kommunizierende Systeme angeordnet sind. Die problematische Durchführung der elektrischen Leitungen von dem Oberwagen in den Unterwagen entfällt. Dadurch ist der Betrieb verschleißfrei möglich. Damit wird nicht nur der Konstruktionsaufwand verringert, sondern auch die Betriebssicherheit der Anlage erhöht. Ein weiterer Vorteil ist die durch das Übertragungssystem geschaffene Möglichkeit, sicher elektrisch gespeiste Regelelektronik im Bereich des Unterwagens einzusetzen. Damit können einstellungssensible Bauteile, wie zum Beispiel Regelventile durch sichere elektronische Lösungen ersetzt werden.

Neben den vielseitigen Möglichkeiten zur Erweiterung der Regelungstechnik im Unterwagen, bietet das Übertragungssystem auch die Möglichkeit, die Funktion der im Unterwagen angeordneten Baugruppen zu überwachen. So kann beispielsweise der Fahrer über Temperatur, Drehzahl, Druck oder andere den Fahrzustand der Antriebseinheit betreffenden Größen informiert werden.

Durch die in den Unteransprüchen angeführten Maßnahmen sind vorteilhafte Weiterbildungen der hydrostatischen Kolbenmaschine und des Übertragungssystems möglich.

Durch die Anordnung von elektrisch leitfähigen Wicklungen im Inneren eines Gehäuses einer hydrostatischen Kolbenmaschine und zumindest eines permanentmagnetischen Körpers an einer im Betrieb rotierenden Zylindertrommel wird im Inneren der hydrostatischen Kolbenmaschine ein Generator geschaffen. Die Integration des Generators in die Kolbenmaschine erspart nicht nur zusätzlichen Bauraum durch die Anordnung eines externen Generators, sondern reduziert auch den konstruktiven Aufwand, da das Herausführen einer zusätzlichen Antriebswelle, zum Antrieb des externen Generators entfällt. Durch den integrierten Generator kann beispielsweise die Energie, die zum Betätigen von Regel- und Schaltventilen sowie Sensoren im Bereich der hydrostatischen Kolbenmaschine erforderlich ist in unmittelbarerer Nähe erzeugt werden, so daß eine aufwendige Verlegung von elektrischen Zuleitungen aus einer zentralen Versorgung entfällt. Durch die nur kurzen Leitungswege sinkt nicht nur der Installationsaufwand, sondern auch eine eventuelle Fehlersuche ist einfach möglich.

In der Zeichnung sind bevorzugte Ausführungsformen der hydrostatischen Kolbenmaschine und des Übertragungssystems vereinfacht dargestellt und in der nachfolgenden Beschreibung näher erläutert. Es zeigen:
- Fig. 1: eine schematische Darstellung eines hydrostatisch angetriebenen Fahrzeugs mit einem Ober- und einem Unterwagen;
- Fig. 2: einen Teilschnitt durch ein Ausführungsbeispiel einer hydrostatischen Kolbenmaschine;
- Fig. 3: einen Teilschnitt im Ausschnitt 3 der Fig. 2 durch eine hydrostatische Kolbenmaschine; und
- Fig. 4: eine Schnittdarstellung entlang der Linie IV-IV der Fig. 3.

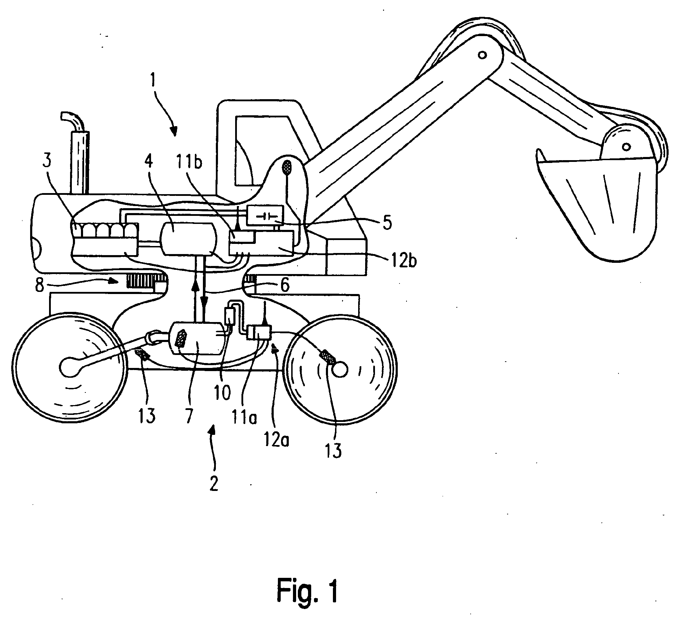

In Fig. 1 ist ein hydrostatisch angetriebenes Fahrzeug dargestellt, wobei in einem Teilaufriss die wesentlichen Komponenten des hydrostatischen Antriebs dargestellt sind. Das Fahrzeug weist einen Oberwagen 1 und einen Unterwagen 2 auf, welche drehbar miteinander verbunden sind. In dem Oberwagen 1 ist ein Antriebsmotor 3 angeordnet, welcher im Normalfall als Brennkraftmaschine ausgeführt ist. Die Abtriebswelle des Antriebsmotors 3 ist mit einer hydrostatischen Kolbenmaschine 4 verbunden. In dem Oberwagen 1 ist weiterhin eine elektrische Anlage 12b angeordnet, welche von einer Batterie 5 mit elektrischer Energie versorgt wird. Die Batterie 5 wird durch einen nicht dargestellten Generator, der von dem Antriebsmotor 3 angetrieben wird, gespeist. In der Zeichnung ist die elektrische Anlage 12b als Einheit zusammengefaßt dargestellt. Sie umfaßt neben den Signaleinrichtungen des Fahrzeugs auch Eingänge für die Bedienelemente, wie etwa Fahrhebel, Fahrtrichtungsanzeiger usw., sowie Ein- und Ausgänge für die Steuer- und Regelelektronik des Antriebsmotors 3.

Ein von der hydrostatischen Kolbenmaschine 7 gespeistes Leitungssystem 6 führt durch einen Drehkranz 8, der den Oberwagen 1 mit dem Unterwagen 2 verbindet, in den Unterwagen 2 und verbindet so einen Hydromotor 7 mit der hydrostatischen Kolbenmaschine 4. Das Leitungssystem 6 kann neben den Arbeitsdruckleitungen für den Fahrantrieb auch eine oder mehrere Steuerleitungen sowie zusätzliche Druckleitungen und eine Tankleitung zur Betätigung einer Lenkeinrichtung aufweisen. Die Steuerleitungen dienen beispielsweise der Einstellung eines Schwenkwinkels des Hydromotors 7. Die Abtriebswelle des Hydromotors 7 ist über eine Kardanwelle und ein nicht dargestelltes Verteilergetriebe mit zumindest einer Achse des Fahrzeugs verbunden (Beispiel Radbagger).

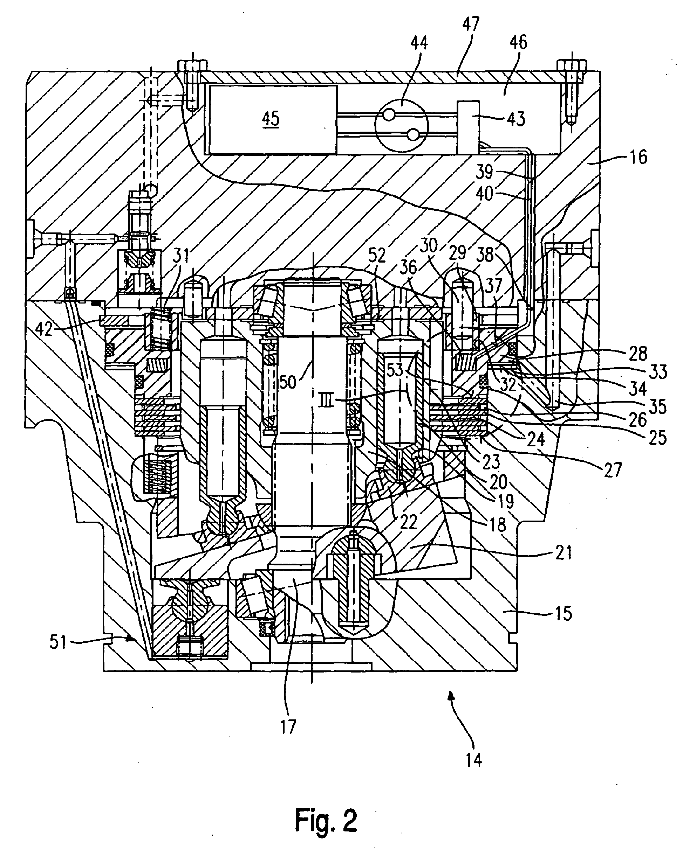

Der Hydromotor 7, der unter Bezugnahme auf die Fig. 2 - 5 ausführlich beschrieben wird, weist einen integrierten Generator auf, dessen Anschlußleitungen mit einem Kondensator 10 verbunden sind. Der Kondensator 10 dient als Zwischenspeicher der von dem integrierten Generator erzeugten elektrischen Energie. Damit ist es möglich, auch während eines kurzfristigen Anhaltens des Hydromotors 7 ausreichend elektrische Energie zu Verfügung zu haben, um die Stromversorgung der elektrischen Anlage 12a des Unterwagens 2 sicherzustellen. Zur elektrischen Anlage 12a des Unterwagens 2 gehören z. B. Drehzahlsensoren, Temperatur- sowie Druckfühler oder elektrische Schaltventile, welche in der Zeichnung allgemein als Sensoren 13 dargestellt sind.

Weiterhin umfaßt die elektrische Anlage 12a des Unterwagens 2 eine Sende- und/oder Empfangseinrichtung 11a, welche mit einer in der elektrischen Anlage 12b des Oberwagens 1 angeordneten zweiten Sende- und/oder Empfangseinrichtung 11b kommuniziert. Die Kommunikation zwischen der Sende- und/oder Empfangseinrichtung 11a des Unterwagens 2 und der zweiten Sende- und/oder Empfangsvorrichtung 11b des Oberwagens 1 erfolgt durch die Übertragung von Funksignalen, wobei vorzugsweise das Bluetooth-Verfahren eingesetzt wird. Durch die Funkverbindung zwischen den elektrischen Anlagen 12a und 12b des Unterwagens 2 bzw. des Oberwagens 1 ist es möglich, die Werte, welche in den Sensoren 13 erfaßt werden, z. B. in der Armaturentafel des Führerhauses des Oberwagens 1 anzuzeigen und so dem Fahrzeugführer mitzuteilen. Bei der Bluetooth Technologie kann die Information, (z. B. Wirkungsgrad Überwachung, Serviceintervalle, Zykluszeitenstatistik) auch weitergesendet werden und woanders verarbeitet werden.

Zur Informationsübermittlung an den Fahrzeugführer ist es ausreichend, die Sende- und/oder Empfangseinrichtung 11a des Unterwagens als reine Sendevorrichtung auszubilden, welche Maßsignale an die Sende- und/oder Empfangseinrichtung 11b, welche als reine Empfangseinrichtung ausgebildet ist, übermittelt. Wird die Funkverbindung bidirektional ausgeführt, so ist es zudem möglich, zwischen der Sende- und/oder Empfangseinrichtung 11b des Oberwagens 1 und der Sende- und/oder Empfangsvorrichtung 11a des Unterwagens 2 Steuerbefehle zu übertragen. So kann die Änderung eines Fahrbefehls durch den Fahrzeugführer im Unterwagen 2 durch direkte Betätigung von Schaltventilen umgesetzt werden. Die Anzahl der durch den Drehkranz 8 durchzuführenden hydraulischen Leitungen kann damit reduziert werden, Damit sinkt neben den Herstellungskosten auch die Gefahr einer Leckage im Bereich der drehbaren Leitungsverbindung.

In Fig. 2 ist ein bevorzugtes Ausführungsbeispiel eines Hydromotors 7 eines hydrostatischen angetriebenen Fahrzeugs dargestellt. Das Gehäuse des Hydromotors 7 besteht aus einem ersten Gehäuseteil 15 und einem zweiten Gehäuseteil 16. In dem ersten Gehäuseteil 15 ist eine Abtriebswelle 17 drehbar gelagert. Eine Zylindertrommel 18 ist verdrehgesichert auf der Abtriebswelle 17 angeordnet. Die Zylindertrommel 18 weist um ihre Mittelachse 50 herum angeordnet mehrere parallel zur Mittelachse 50 ausgerichtete Zylinderbohrungen 19 auf. In den Zylinderbohrungen 19 sind Kolben 20 angeordnet, welche mit der Zylinderbohrung 18 zu einem Zylinderraum zusammenwirken. Die Kolben 20 sind hohl ausgeführt und weisen an ihrer von dem Zylinderraum abgewandten Seite eine Kugelgelenkverbindung mit einem Gleitschuh 22 auf, wobei sich der Gleitschuh 22 auf einer Schrägscheibe 21 abstützt. Der Neigungswinkel der Schrägscheibe 21 bezüglich der Mittelachse 50 der Zylindertrommel 18 ist mit Hilfe einer druckbetätigten Verstellvorrichtung 51 einstellbar, wodurch sich der Hub der Kolben 20 und somit das Schluckvolumen des Hydromotors 7 einstellen läßt.

An dem äußeren Umfang der Zylindertrommel 18 sind über ihren Umfang verteilt Außennuten 23 in die Mantelfläche der Zylindertrommel 18 eingebracht. Die Außennuten 23 erstrecken sich in Längsrichtung der Zylindertrommel 18 und treten zumindest auf der von der Schrägscheibe 21 abgewandten Seite der Zylindertrommel 18 stirnseitig aus. Im Eingriff mit den Außennuten 23 sind an der Zylindertrommel 18 erste Bremsscheiben 24 angeordnet. Die im dargestellten Ausführungsbeispiel 3 ersten Bremsscheiben 24 weisen an ihrem inneren Umfang eine mit der Geometrie der Außennut 23 korrespondierende Verzahnung auf, mit der die ersten Bremsscheiben 24 von der Stirnseite 52 her auf die Zylindertrommel 18 aufgeschoben sind. Jede der drei ersten Bremsscheiben 24 ist zwischen zweiten Bremsscheiben 25 angeordnet, wobei die zweiten Bremsscheiben 25 an ihrem äußeren Umfang eine Verzahnung aufweisen, mit der sie sich im Eingriff mit Innennuten 26 befinden, die in das erste Gehäuseteil 15 eingebracht sind.

Der Durchmesser der kreisförmigen Außengeometrie der ersten Bremsscheiben 24 ist größer als der Durchmesser der kreisförmigen Innengeometrie der zweiten Bremsscheiben 25, so daß sich eine kreisscheibenförmige Kontaktfläche zwischen den jeweils benachbarten ersten und zweiten Bremsscheiben 24 und 25 ergibt. Die ersten und zweiten Bremsscheiben 24 bzw. 25 sind in axialer Richtung nicht in dem ersten Gehäuseteil 15 fixiert, wobei durch eine radiale Stufung 27 in dem ersten Gehäuseteil 15 eine Anlagefläche in Richtung der Schrägscheibe 21 für die äußerste zweite Bremsscheibe 25 ausgebildet ist. Auf der von der radialen Stufung 27 abgewandten Seite des Satzes erster und zweiter Bremsscheiben 24 und 25 ist ein Bremsring 28 angeordnet, welcher sich in axialer Richtung in Anlage mit der Stirnfläche 53 einer zweiten Bremsscheibe 25 befindet.

Der Bremsring 28 weist an seinem äußeren Umfang eine radiale Stufe auf, welche mit einer zweiten radialen Stufe 33 des ersten Gehäuseteiles 15 korrespondiert. Durch die radiale Stufung des Bremsrings 28 ist an dem Bremsring 28 eine Kolbenfläche 34 ausgebildet, welche zusammen mit der zweiten radialen Stufung des ersten Gehäuseteils 15 einen Druckraum ausbildet. In den Druckraum mündet eine Steuerleitung 35, welche als Bohrung in dem ersten Gehäuseteil 15 eingebracht ist.

Auf seiner von der Schrägscheibe 21 abgewandten Seite weist der Bremsring 28 mehrere über den Umfang verteilte Ausnehmungen 32 auf, in welche Führungshülsen 29 eingesetzt sind. In das zweite Gehäuseteil 16 sind Führungsstifte 30 eingepreßt, auf welchen ein Teil der Führungshülsen 29 geführt ist und damit der Bremsring 28 axial verschieblich gelagert ist. In dem anderen Teil der Führungshülsen 29 ist anstelle des Führungsstiftes 30 je eine Druckfeder 31 angeordnet, welche sich an dem Bremsring 28 bzw. der Stirnseite des zweiten Gehäuseteils 16 auf der gegenüberliegenden Seite abstützt. Der Bremsring 28 wird damit in axialer Richtung mit einer Kraft beaufschlagt, welche ihn in Richtung der Schrägscheibe 21 drückt.

Zwischen den ersten und zweiten Bremsscheiben 24 und 25 wird durch die von dem Bremsring 28 ausgeübte Axialkraft eine Flächenpressung erzeugt. Bei sich drehender Zylindertrommel 18 und der damit verbundenen ersten Bremsscheiben 24 wird durch die Verzahnungen der ersten und zweiten Bremsscheiben 24 und 25 mit dem ersten Gehäuseteil 15 bzw. der Zylindertrommel 18 dadurch eine Bremskraft auf die Zylindertrommel 18 erzeugt.

Über die Steuerleitung 35 ist in dem Druckraum ein Druck erzeugbar, durch den über die Stirnfläche 34 eine Kraft auf den Bremsring 28 wirkt, der der Kraft der Druckfedern 31 entgegengerichtet ist. Diese Gegenkraft kann soweit erhöht werden, bis von dem Bremsring 28 keine Kraft in axialer Richtung auf die ersten und zweiten Bremsscheiben 24 und 25 übertragen wird. Die Flächenpressung zwischen den ersten und zweiten Bremsscheiben 24 und 25 wird verringert und die Bremskraft auf die Zylindertrommel 18 reduziert. Zur Begrenzung des axialen Hubes des Bremsrings 28 ist in einer Nut des ersten Gehäuseteils 15 eine Anschlagscheibe 42 angeordnet.

In dem Bremsring 28 ist eine Wicklung 36 aus einem elektrisch leitenden Material eingebracht. Die Anschlußleitungen 40 der Wicklungen 36 werden durch eine in die Stirnseite des Bremsrings eingebrachte Nut 37 und eine in dem ersten Gehäuseteil 15 angeordnete korrespondierende zweite Nut 38 herausgeführt. Durch die Verlegung der Anschlußleitungen in einer ersten und zweiten Nut 37 und 38 ist eine Möglichkeit zur axialen Bewegung der Anschlußleitungen 40 relativ zu dem Bremsring 28 und dem ersten Gehäuseteil 15 gegeben. Die axiale Verschiebung des Bremsrings 28 in dem ersten Gehäuseteil 15, bei einer Betätigung oder einem Lösevorgang der Lamellenbremse, führt damit nicht zu einem Knicken der Anschlußleitungen 41 an der Stelle der Relativbewegung. Bei einer ausreichend großen Dimensionierung der zweiten Nut 38 kann die Anschlußleitung 41 in dem Bremsring 28 auch vollständig umspritzt sein. Die Verlegung der Anschlußleitung 41 erfolgt dann in einer entsprechend großzügig bemessenen Schlaufe in der zweiten Nut 38.

An der Zylindertrommel 18 ist ein Magnetkörper 41 angebracht, dessen Position in axialer Richtung mit der Position der Wicklung 36 korrespondiert, so daß bei Drehung der Zylindertrommel 18 durch das sich ändernde Magnetfeld in der Wicklung 36 eine elektrische Spannung induziert wird. Die Anschlußleitungen 40 sind durch eine Bohrung 39 in dem zweiten Gehäuseteil 16 einem Regler 43 zugeführt, durch den die Spannung, welche mit der Drehzahl der Zylindertrommel 18 variiert, auf einen Maximalwert begrenzt wird. Zur Speicherung der erzeugten Energie ist mit dem Regler 43 ein Elektrolytkondensator 44 verbunden, aus dem die Versorgung der weiteren elektrischen Anlage 45 sichergestellt wird. Durch den Regler 43 und den Elektrolytkondensator 44 wird der weiteren elektrischen Anlage 45 eine Gleichspannung konstanter Größe zugeführt. Die Pufferung kann anstatt mit einem Kondensator auch mit einem Akkumulator erfolgen.

Zur Aufnahme des Reglers 43 des Elektrolytkondensators 44 sowie der elektrischen Anlage 45 ist in einer Außenseite des zweiten Gehäuseteils 16 ein Raum 46 angeordnet, der mit einem Deckel 47 verschließbar ist, wobei der Deckel 47 für Arbeiten an der elektrischen Anlage 45 abnehmbar ist. Bei Verwendung eines Funkübertragungssystems mit der Bluetooth Technologie ist eine Miniaturisierung der Komponenten einfach möglich, so daß die Sende- und/oder Empfangseinrichtung als Teil der elektrischen Anlage 45 ausgeführt sein kann.

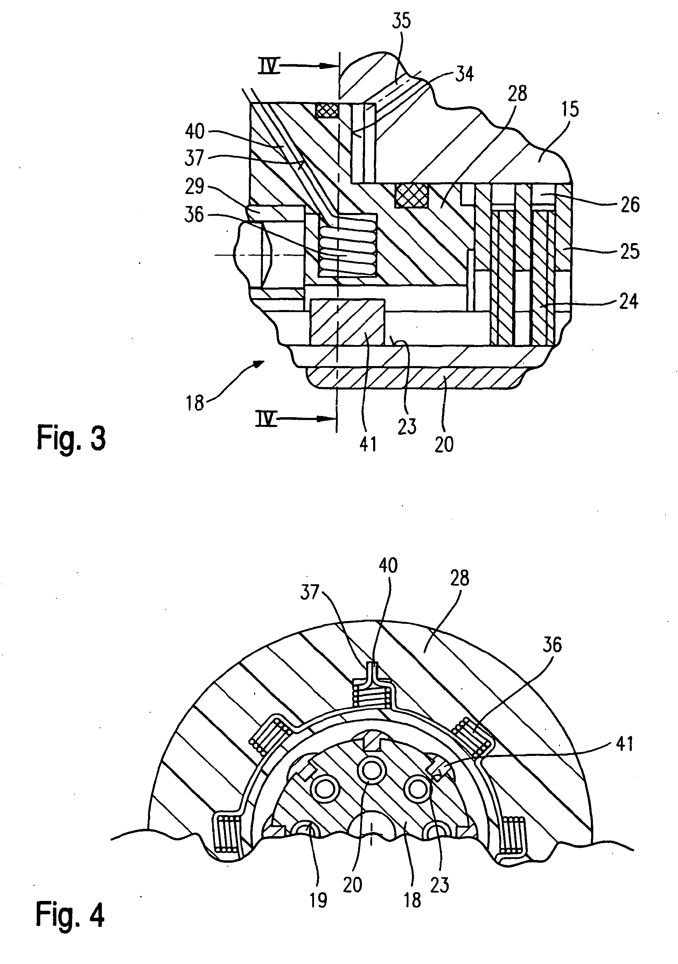

Fig. 3 zeigt eine vergrößerte Darstellung im Ausschnitt 3 der Fig. 3. Die Anschlußleitungen 40 der Wicklungen 36 werden entlang der ersten Nut 37 aus dem Bremsring 28 herausgeführt. Der Bremsring 28 ist vorzugsweise aus einem Kunststoff hergestellt, so daß die Wicklung 36 durch Umspritzen in dem Bremsring 28 fixiert werden kann. Um eine vollständige Reduzierung des Druckvolumens zu verhindern, sind an der Stirnfläche 34 des Bremsrings 28 Stege 34a angebracht. In der Außennut 23 der Zylindertrommel 18 ist der Magnetkörper 41 angeordnet.

Eine Schnittdarstellung entlang der Linie IV-IV der Fig. 3 ist in Fig. 4 dargestellt. In dem Bremsring 28 sind über den Umfang verteilt mehrere Wicklungen 36 angeordnet, wobei die Wicklungen 36 zur Erhöhung der von dem wechselnden Magnetfeld durchdrungenen Anzahl von Wicklungen 36 in Serie angeordnet sind. Entsprechend der Anzahl von Wicklungen 36 sind in den Außennuten 23 der Zylindertrommel 18 mehrere Magnetkörper 41 angeordnet. Die Magnetkörper 41 können zur Fixierung beispielsweise in die Außennuten 23 eingepreßt sein.

Um die Montage und die Befestigung der einzelnen Magnetkörper 41 auf der Zylindertrommel 18 zu vereinfachen, können die Magnetkörper 41 ebenfalls in einem Kunststoffring vergossen sein, der einteilig auf die Zylindertrommel 18 aufschiebbar ist.

Ferner ist es möglich, durch mehrere voneinander getrennte Wicklungssysteme, welche jedoch gemeinsam in einem Bremsring 28 angeordnet werden, eine mehrphasige Spannungserzeugung auszubilden und durch unterschiedliche Anzahlen von Wicklungen in den einzelnen Wicklungssträngen unterschiedliche Maximalspannungen zu erzeugen, wovon eine Phase durch einen Elektrolytkondensator 44 gepuffert sein kann, während die zweite nur zur Versorgung von Aggregaten eingesetzt wird, deren Funktion nur im Fahrbetrieb erforderlich ist.

## Patentansprüche

1. Ein hydrostatisch angetriebenes Fahrzeug mit einem Übertragungssystem,
wobei das hydrostatisch angetriebene Fahrzeug
einen Oberwagen (1) umfasst, der auf einem Unterwagen (2) drehbar angeordnet ist und wobei im Unterwagen (2) zumindest eine erste hydrostatische Kolbenmaschine (7) zum Antrieb des Fahrzeugs angeordnet ist, und wobei im Oberwagen (1) ein Antriebsmotor (3) zum Antreiben einer zweiten hydrostatischen Kolbenmaschine (4) zur Versorgung der ersten hydrostatischen Kolbenmaschine (7) vorgesehen ist,
wobei das Übertragungssystem
eine erste Sende- und/oder Empfangsvorrichtung (11a) und eine zweite Sende- und/oder Empfangsvorrichtung (11b) umfasst,
wobei die erste Sende- und/oder Empfangsvorrichtung (11a) in dem Unterwagen (2) vorgesehen ist, und wobei zur drahtlosen Kommunikation mit der ersten Sende- und/oder Empfangsvorrichtung (11a) des Unterwagens (2) in dem Oberwagen (1) die zweite Sende- und/oder Empfangsvorrichtung (11b) angeordnet ist,
**dadurch gekennzeichnet,**
**dass** die erste Sende- und/oder Empfangsvorrichtung (11a) von einer in der ersten hydrostatischen Kolbenmaschine (7) angeordneten Vorrichtung mit elektrischer Energie versorgt wird.

2. Hydrostatisch angetriebenes Fahrzeug nach Anspruch 1,
**dadurch gekennzeichnet,**
**dass** jede hydrostatische Kolbenmaschine ein Gehäuse (15, 16) und eine darin drehbar gelagerte Zylindertrommel (18) aufweist, wobei in jeder hydrostatischen Kolbenmaschine (7) zumindest eine elektrisch leitfähige Wicklung (36) verdrehgesichert in dem Gehäuse (15) angeordnet ist und ein permanentmagnetischer Körper (41) fest mit der Zylindertrommel (18) verbunden ist und wobei das Magnetfeld des permanentmagnetischen Körpers (41) bei Rotation der Zylindertrommel (18) ein sich änderndes Magnetfeld in der Wicklung (36) induziert.

## Claims

1. Hydrostatically driven vehicle having a transmission system,
wherein the hydrostatically driven vehicle
comprises a superstructure (1) that is disposed rotatably on an undercarriage (2) and wherein disposed in the undercarriage (2) is at least a first hydrostatic piston engine (7) for driving the vehicle, and wherein provided in the superstructure (1) is a drive motor (3) for driving a second hydrostatic piston engine (4) for supplying the first hydrostatic piston engine (7),
wherein the transmission system
comprises a first transmitting and/or receiving device (11a) and a second transmitting and/or receiving device (11b),
wherein the first transmitting and/or receiving device (11a) is provided in the undercarriage (2), and wherein for wireless communication with the first transmitting and/or receiving device (11a) of the undercarriage (2) the second transmitting and/or receiving device (11b) is disposed in the superstructure (1),
**characterized in**
**that** the first transmitting and/or receiving device (11a) is supplied with electrical energy by a device disposed in the first hydrostatic piston engine (7).

2. Hydrostatically driven vehicle according to claim 1,
**characterized in**
**that** each hydrostatic piston engine comprises a housing (15, 16) and a cylinder drum (18) mounted rotatably therein, wherein in each hydrostatic piston engine (7) at least one electrically conductive winding (36) is disposed so as to be locked against rotation in the housing (15) and a permanent-magnet body (41) is connected in a fixed manner to the cylinder drum (18) and wherein the magnetic field of the permanent-magnet body (41) upon rotation of the cylinder drum (18) induces a changing magnetic field in the winding (36).

## Revendications

1. Véhicule à entraînement hydrostatique comprenant un système de transmission, le véhicule à entraînement hydrostatique
comprenant une tourelle (1), qui est disposée de manière à tourner sur un châssis (2), et au moins une première machine à pistons hydrostatique (7) destinée à entraîner le véhicule étant disposée dans le châssis (7), et un moteur d'entraînement (3) destiné à entraîner une seconde machine à pistons hydrostatique (4) étant prévu dans la tourelle (1) pour alimenter la première machine à pistons hydrostatique (7), le système de transmission
comprenant un premier dispositif émetteur et/ou récepteur (11a) et un second dispositif émetteur et/ou récepteur (11b),
le premier dispositif émetteur et/ou récepteur (11a) étant prévu dans le châssis (2), et le second dispositif émetteur et/ou récepteur (11b) étant disposé dans la tourelle (1) pour la communication sans fil avec le premier dispositif émetteur et/ou récepteur (11a) du châssis (2),
**caractérisé en ce**
**que** le premier dispositif émetteur et/ou récepteur (11a) est alimenté en énergie électrique par un premier dispositif disposé dans la première machine à pistons hydrostatique (7).

2. Véhicule à entraînement hydrostatique selon la revendication 1,
**caractérisé en ce**
**que** chaque machine à pistons hydrostatique présente un boîtier (15, 16) et un tambour à cylindre (18) logé dans ledit boîtier de manière à pouvoir tourner, au moins un enroulement électroconducteur (36) étant disposé dans chaque machine à pistons hydrostatique (7) sans possibilité de rotation dans le boîtier (15), et un corps magnétique permanent (41) étant relié de manière fixe au tambour à cylindre (18), et le champ magnétique du corps magnétique permanent (41) induisant un champ magnétique variable dans l'enroulement (36) lors de la rotation du tambour à cylindre (18).
